# EUROPEAN PATENT SPECIFICATION

(11) **EP 4 655 503 B1**
(45) Date of publication and mention of the grant of the patent: **11.11.2026**
(21) Application number: 23825441.1
(22) Date of filing: 13.12.2023
(51) Int. Cl.: F04B 25/00, F04B 41/06, F04B 37/14, F04B 39/14, F04B 39/12, F04C 23/00, F04C 25/02, F04D 19/04, F04D 25/16, F04D 27/02, F16L 23/00

(54) **VACUUM PUMPING SYSTEM**
VAKUUMPUMPENSYSTEM
SYSTÈME DE POMPAGE À VIDE

(30) Priority: 26.01.2023 GB 202301114
(43) Date of publication of application: 03.12.2025
(73) Proprietor: Edwards Limited, Burgess Hill, Sussex RH15 9TW (GB)
(72) Inventor: DEO, Hammond, Burgess Hill Sussex RH15 9TW (GB); PUTTICK, Stuart Martin, Burgess Hill Sussex RH15 9TW (GB)
(74) Representative: Ford, Alexander
(86) International application number: PCT/GB2023/053206
(87) International publication number: WO 2024/156976

(56) References cited:
- EP-A1- 2 330 299
- WO-A1-2020/109790
- CN-A- 106 762 538
- CN-A- 110 671 298
- GB-A- 2 568 338
- US-A1- 2017 200 622

## Description

### FIELD OF THE INVENTION

The present invention relates to connectors for use in a vacuum pumping system, such as connectors for connecting together vacuum pumps and/or abatement apparatuses.

### BACKGROUND

Vacuum pumping and abatement systems are used in varied and different technological fields, for example semiconductor fabrication. Typically, in said systems, vacuum pumping equipment is used to pump gas (e.g. gas from an industrial process) out of a particular location, and abatement equipment is used to abate (e.g. destroy or dispose of) undesirable substances (e.g. exhaust gas) which have been produced.

In many systems, vacuum pumps may be arranged as stack, for example with booster pumps positioned above or on top of combination vacuum pumps.

US 2017/0200622 A1 describes a prior art vacuum evacuation system used to evacuate a processing gas from one or more process chambers for use in, for example, a semiconductor-device manufacturing apparatus.

CN 110 671 298 A describes a prior art two-stage vacuum evacuation system of a single crystal furnace.

WO 2020/109790 A1 describes a prior art vacuum exhaust system which exhausts gas from multiple chambers such as process chambers used in semiconductor fabrication

### SUMMARY OF INVENTION

It tends to be desirable to easily separate pumps from a pump stack, for example to allow for easy replacement of one of the pumps while the other remains operative in the system.

Also, it tends to be desirable to provide for a direct flow of process gas between a booster and a combination pump in the pumping stack. This tends to provide much better vacuum conductance performance compared to systems that do not provide for such direct flow.

Also, it tends to be desirable to provide manifolding across all pumping stacks.

Accordingly, there is provided an apparatus, including a connector for use between vacuum pumps, which tends provide improved conductance (by direct flow of process gas between a booster and a combination pump in the pumping stack), manifolding of all the pumping stacks, and easy separation of pumps from a pump stack inside the system.

In an aspect, there is provided a pumping system according to claim 1.

The connector is an interstage pump isolating device for selectively isolating a first pump from one or both of a manifold and a second pump.

The first opening is configured to be fluidly coupled to an exhaust of a first vacuum pump. The second opening is configured to be fluidly coupled to an inlet of a second vacuum pump. The third opening is configured to be fluidly coupled to a manifold.

The first conduit portion may be a substantially straight conduit between the first opening and the second opening. The second conduit portion may be a substantially straight conduit between the branching point and the third opening.

The first vacuum pump is coupled to the first opening. The second vacuum pump is coupled to the second opening.

The first vacuum pump may be a booster pump.

The second vacuum pump may be a combination vacuum pump.

The first and second valves may be gate valves.

The manifold is coupled to the third opening of each pumping module in the plurality of pumping modules.

In a further aspect, there is provided a method for operating a pumping system, the pumping system being in accordance with the preceding aspect. The method comprises: for each pumping module in the plurality of pumping modules: opening the first valve of that pumping module; and pumping, by the first and second vacuum pumps of that pumping module, fluid from the first vacuum pump to the second vacuum pump via the first conduit portion.

The method may further comprise, for a first pumping module of the plurality of pumping modules: closing the first valve of the first pumping module, thereby to isolate the second vacuum pump of the first pumping module; and opening the second valve of the first pumping module.

The method may further comprise, for at least one pumping module of the plurality of pumping modules other than the first pumping module, opening the second valve of that pumping module, such that the at least one pumping module of the plurality of pumping modules takes the pumping load of the second vacuum pump of the first pumping module.

The method may further comprise, after isolating the second vacuum pump of the first pumping module, performing a servicing operation on the second vacuum pump of the first pumping module.

The method may further comprise, for a first pumping module of the plurality of pumping modules: closing the second valve of the first pumping module, thereby to isolate the first vacuum pump, the second vacuum pump, and the first valve of the first pumping module from the remainder of the pumping system. The method may further comprise, after isolating the first vacuum pump, the second vacuum pump, and the first valve of the first pumping module from the remainder of the pumping system, performing a servicing operation on one or more of the first vacuum pump, the second vacuum pump, or the first valve of the first pumping module.

The method may further comprise, for a first pumping module of the plurality of pumping modules: closing the second valve of each pumping module of the plurality of pumping modules other than the first pumping module, thereby to isolate each pumping module of the plurality of pumping modules other than the first pumping module from the manifold. The method may further comprise, after isolating each pumping module of the plurality of pumping modules other than the first pumping module from the manifold: performing a servicing operation on one or more of the first vacuum pump, the second vacuum pump, the connector, the first valve, and/or the second valve of the first pumping module; and/or performing a servicing operation on the manifold.

### BRIEF DESCRIPTION OF DRAWINGS

Figure 1 is a schematic illustration (not to scale) showing a vacuum pumping and/or abatement system;
Figure 2 is a schematic illustration (not to scale) showing a perspective view of a pumping module of the vacuum pumping and/or abatement system;
Figure 3 is a schematic illustration (not to scale) showing a connector of the pumping module;
Figure 4 is process flow chart showing certain steps of a method corresponding to a first mode of operation of the vacuum pumping and/or abatement apparatus;
Figure 5 is a schematic illustration (not to scale) showing a gas flow path through the connector during the first mode of operation;
Figure 6 is process flow chart showing certain steps of a method corresponding to a second mode of operation of the vacuum pumping and/or abatement apparatus;
Figure 7 is a schematic illustration (not to scale) showing a gas flow path through the connector during the second mode of operation;
Figure 8 is process flow chart showing certain steps of a method corresponding to a third mode of operation of the vacuum pumping and/or abatement apparatus; and
Figure 9 is process flow chart showing certain steps of a method corresponding to a fourth mode of operation of the vacuum pumping and/or abatement apparatus.

### DETAILED DESCRIPTION

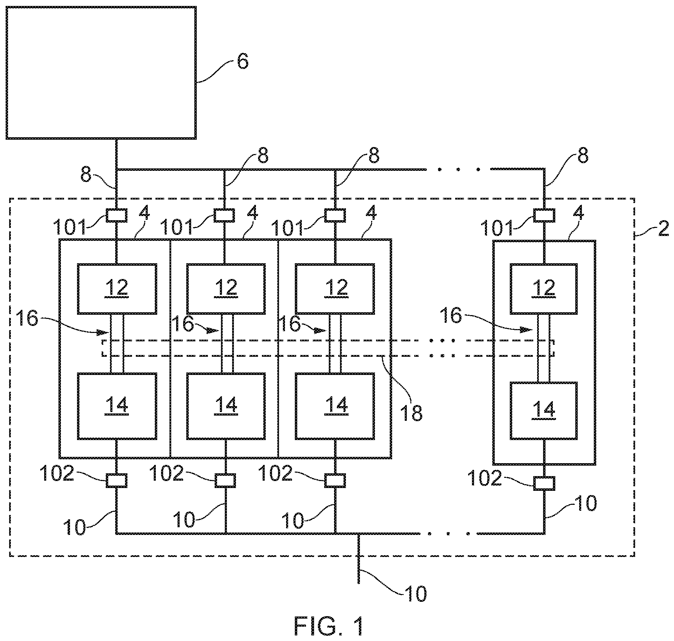

Figure 1 is a schematic illustration (not to scale) showing a vacuum pumping system 2.

The system 2 comprises a plurality of pumping modules 4, which may also be referred to as "units" or "slices". Each of the pumping modules 4 is fluidly connected to an entity 6 via a respective fluid input line 8, commonly referred to as a "foreline". The entity 6 may, for example, be a chamber or room used in an industrial process such as semiconductor fabrication. Each pumping module 4 is also fluidly connected to a respective exhaust line 10.

The system comprises a plurality of valves 101, 102, e.g. gate valves, located on the fluid input lines 8 and the exhaust lines 10. The valves 101 located along the fluid input lines 8, i.e. upstream of the pumping modules 4, are hereafter referred to as "input line valves". The valves 102 located along the exhaust lines 10, i.e. downstream of the pumping modules 4, are hereafter referred to as "exhaust line valves". More specifically, in this embodiment, for each pumping module 4, there is a respective input line valve 101 located along the fluid input line 8 of that pumping module 4, and also a respective exhaust line valve 102 located along the exhaust line 10 of that pumping module 4. Thus, each pumping module 4 is disposed between a respective pair of upstream and downstream valves 101, 102.

Each of the pumping modules 4 comprises a respective first pump 12, a second pump 14, and a connector 16 connecting together the first pump 12 and the second pump 14.

The first and second pumps 12, 14 are vacuum pumps for pumping gas out of the entity 6. More specifically, in this embodiment, each of the first pumps 12 is a booster pump. In this embodiment, each of the second pumps 14 is a combination pump, which may be a combination of a semiconductor dry pump and a booster pump.

For each pumping module 4, an inlet of the first pump 12 is fluidly coupled to the fluid input line 8 of that pumping module 4. An outlet of the first pump 12 is fluidly coupled to an inlet of the connector 16 of that pumping module 4. An outlet of the connector 16 is fluidly coupled to an inlet of the second pump 14 of that pumping module 4. An outlet of the second pump 14 is fluidly coupled to the exhaust line 10 of that pumping module 4.

In one mode of operation, the system 2 pumps gas out of the entity 6 via the fluid input lines 8. In particular, gas is pumped by the pumps 12, 14 of the pumping modules such that it travels from the entity 6 to the first pumps 12 via the fluid input lines 8, then through the first pumps 12, then from the first pumps 12 to the second pumps 14 via the connectors 16, then through the second pumps 14, and then from the second pumps 14 out of the system 2 via the exhaust lines 10.

In some embodiments, the system 2 abates (e.g., destroys or disposes of) undesirable substances produced by the entity 6 which may be present in the pumped gas. That is to say, the system 2 may comprise one or more abatement apparatuses for abating undesirable substances produced by the entity 6. Thus, the vacuum pumping system 2 may be a vacuum pumping and/or abatement system.

In some embodiments, the system 2 may further include additional modules or apparatuses including, but not limited to, one or more of an inverter for converting AC electrical power into AC electrical power with modified frequency, an electronic controller for controlling operation of all or part of the system 2, or a facilities apparatus for carrying out functions relating to facilities.

The vacuum pumping and/or abatement system 2 may be an integrated system. The term "integrated system" may be used to refer to two or more modules integrated together into a common system, the modules being selected from the group of modules consisting of: a module comprising vacuum pumping apparatus, a module comprising process gas abatement apparatus, and a module comprising a controller for controlling the vacuum pumping and/or abatement apparatuses.

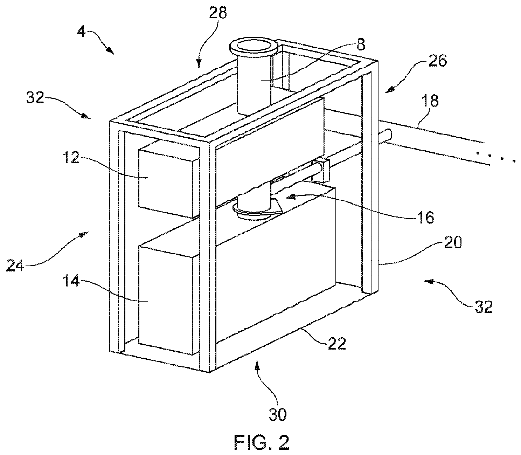

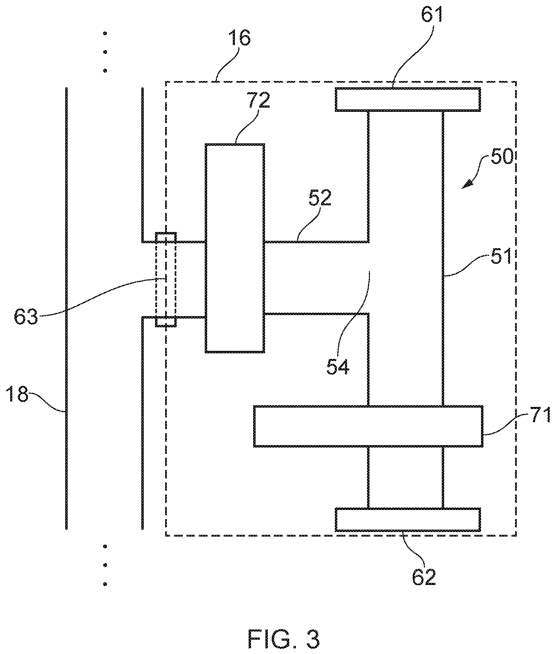

In this embodiment the pumping modules 4 are fluidly coupled together via a manifold 18. More specifically, the manifold 18 connects together the connectors 16 of the pumping modules 4 (as described in more detail later below with reference to Figures 2 and 3), thereby to allow for the gas to be pumped between pumping modules 4.

Figure 2 is a schematic illustration (not to scale) showing a perspective view of a pumping module 4 of the vacuum pumping system 2.

The pumping module 4 comprises a frame 20 and a base 22 connected to the frame 20. The base 22 may be considered to be a part of the frame 20.

The frame 20 and/or base 22 may be bolted to the ground/floor.

The first pump 12, the second pump 14, and the connector 16 of the pumping module 4 are disposed within the volume defined by the frame 20 and the base 22. The frame 20 comprises a plurality of interconnected bars coupled to the base 22.

The pumping module 4 has a front side 24, a rear side 26, a top side 28, a bottom side 30, and two opposing lateral sides 32.

Figure 3 is a schematic illustration (not to scale) of the connector 16.

In this embodiment, the connector 16 comprises a conduit 50 having a first conduit portion 51 and a second conduit portion 52.

The first conduit portion 51 comprises a first opening 61, which in this embodiment is located at a first end of the first conduit portion 51, and a second opening 62, which in this embodiment is located at a second end of the first conduit portion 51 opposite to the first end.

The second conduit portion 52 extends from the first conduit portion 51. In particular, the second conduit 52 extends from a branching point 54 on the first conduit 51. The branching point 54 is located along the first conduit 51 at an intermediate position between the first opening 61 and the second opening 62.

The second conduit portion 52 comprises a third opening 63 at an end of the second conduit portion 52 distal from the branching point 54.

The connector 16 comprises a first valve 71. The first valve 71 is disposed along (e.g., in) the first conduit portion 51 between the branching point 54 and the second opening 62. In this embodiment, the first valve 71 is a gate valve.

The connector 16 further comprises a second valve 72. The second valve 72 disposed (e.g., in) the second conduit portion 52 between the branching point 54 and the third opening 63. In this embodiment, the second valve 72 is a gate valve.

In this embodiment, when the connector 16 is installed in the system 2, as shown in Figures 1 and 2, the first opening 61 is fluidly coupled to an outlet or exhaust of the first vacuum pump 12. For example, the first conduit portion 51 may comprise, at its first end and circumscribing the first opening 61, a first flange that may be attached (e.g. bolted) to an outlet of the first pump 12. Also, when the connector 16 is installed in the system 2, the second opening 62 is fluidly coupled to an inlet of the second vacuum pump 14. For example, the first conduit portion 51 may comprise, at its second end and circumscribing the second opening 62, a second flange that may be attached (e.g. bolted) to an inlet of the second pump 14. Also, when the connector 16 is installed in the system 2, the third opening 63 is fluidly coupled to the manifold 18 (as shown in Figure 3). For example, the second conduit portion 52 may comprise, at the third end and circumscribing the third opening 63, a third flange that may be attached (e.g. bolted) to a respective inlet of the manifold 18.

Preferably, the first conduit portion 51 is a substantially straight conduit between the first opening 61 and the second opening 62. This advantageously tends to provide for improved pumping efficiency compared to, for example, pumping systems having convoluted paths between successive pumps. Nevertheless, the first conduit portion 51 may be convoluted.

Preferably, the second conduit portion 52 is a substantially straight conduit between the branching point 54 and the third opening 63. This advantageously tends to provide for improved pumping efficiency compared to, for example, pumping systems having convoluted gas paths. Nevertheless, the second conduit portion 52 may be convoluted.

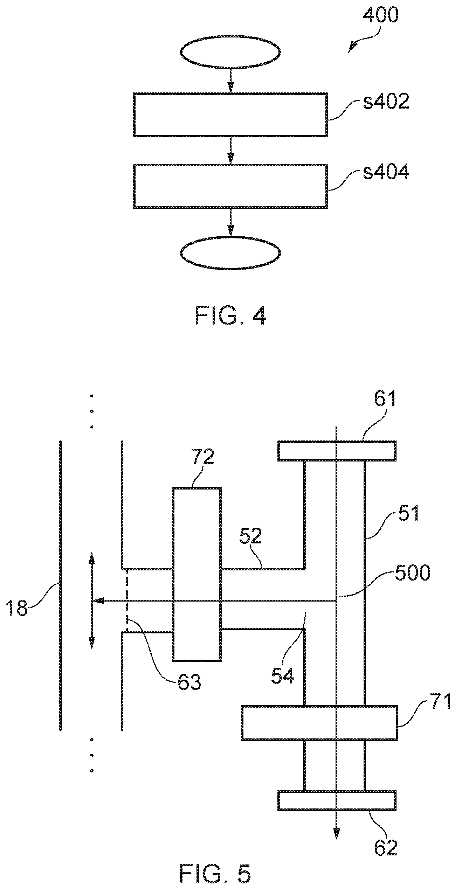

Figure 4 is a process flow chart showing certain steps of a method 400 of operating the system 2. The process of Figure 4 may correspond to a first mode of operation for the system 2.

At step s402, for each of the pumping modules 4, the first valve 71 of the connector 16 is opened, for example by a controller of the system 2. While the first valve 71 of each pumping module 4 is opened at step s402, the second valves 72 of each of the pumping modules 4 may also be open, thereby to provide a shared pumping arrangement.

At step s404, each of the pumping modules 4 pumps gas from the entity 6 and out of the system 2. In particular, for each of the pumping modules 4, the first and second vacuum pumps 12, 14 of that pumping module 4 pump gas from the entity 6, via a respective fluid inlet line 8, and out of the system 2, via a respective exhaust line 10. In each of the pumping modules 4, fluid is pumped from the first pump 12 directly to the second pump 14 via the first conduit portion 51 of the connector 16. The gas may be pumped between pumping module 4 via the manifold 18 and the open second valves 72. Operation of the pumps 12, 14 may be controlled by a controller of the system 2.

Figure 5 is a schematic illustration depicting fluid flow 500 through the connectors 16 of the pumping modules during the first mode of operation (i.e. the method 500).

Thus, a first mode of operation for the system 2 is provided.

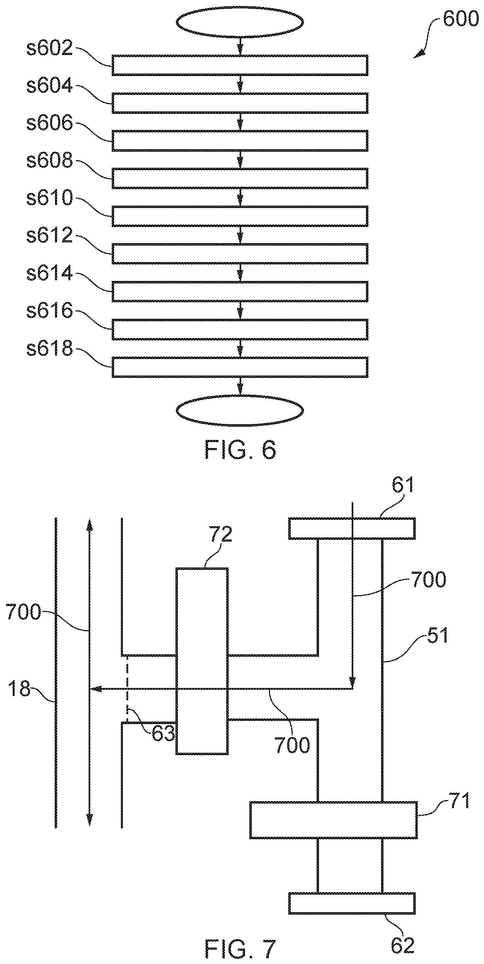

Figure 6 is a process flow chart showing certain steps of another method 600 of operating the system 2. The process of Figure 6 may correspond to a second mode of operation for the system 2.

At step s602, the system 2 may be operated in accordance with the first mode of operation, i.e. the method 400 described in more detail earlier above with reference to Figure 4.

At step s604, for a first pumping module 4 of the plurality of pumping modules 4, the first valve 71 of that first pumping module 4 is closed, for example by a controller of the system 2. In other words, the pumped gas is prevented from flowing from the first pump 12 of the first pumping module 4 to the second pump 14 of the first pumping module 4 by the closed first valve 71. Furthermore, the exhaust line valve 102 in the exhaust line 10 of the first pumping module 4 may be closed, thereby to prevent a backflow of process gas towards the second vacuum pump 14 of the first pumping module 4. Thus, the second vacuum pump 14 of the first pumping module 4 is fluidly isolated from the remainder of the system 2.

At step s606, the second valve 72 of the first pumping module 4 is kept open (or opened in embodiments in which it is previously closed). A controller of the system 2 may control the second valve 72.

At step s608, the second valve 72 of at least one pumping module 4 of the plurality of pumping modules 4 other than the first pumping module 4 (and preferably all available other pumping modules 4) is kept open, for example by a controller of the system 2 (or opened in embodiments in which it is previously closed). Thus, the pumped gas flows from the first pump 12 of the first pumping module 4 into the manifold 18, through the manifold 18, and then into at least one pumping module 4 of the plurality of pumping modules 4 other than the first pumping module 4. In this way, the at least one pumping module 4 of the plurality of pumping modules 4 takes the pumping load of the second vacuum pump 14 of the first pumping module 4 that has been fluidly isolated from the rest of the system.

Figure 7 is a schematic illustration depicting fluid flow 700 through the connector 16 of the first pumping module 4 during the second mode of operation (i.e. the method 600).

At step s610, after fluidly isolating the second vacuum pump 14 of the first pumping module 4, that isolated second vacuum pump 14 may be turned off or deactivated. The isolated second vacuum pump 14 may be decoupled from the rest of the system 2.

At step s612, after fluidly isolating the second vacuum pump 14 of the first pumping module 4, a servicing operation (such as an inspection, maintenance, cleaning, repair, and/or replacement operation) is performed on that isolated second vacuum pump 14. The servicing operation may be performed by a human operator.

At step s614, after performance of the servicing operation on the second vacuum pump 14 of the first pumping module 4, that vacuum pump 14 may be recoupled or reconnected to the system 2, i.e. to the second end of the first conduit portion 51 of the connector 16 of the first pumping module 4. Also the first pumping module 4 is reconnected to the exhaust line valve 102.

At step s616, the second vacuum pump 14 of the first pumping module 4 may be turned on or reactivated.

At step s618, the first valve 71 of the first pumping module 4 is opened, for example by a controller of the system 2. Furthermore, the exhaust line valve 102 in the exhaust line 10 of the first pumping module 4 is opened. The second valve 72 of the first pumping module 4 may be kept open, for example by a controller of the system 2. In this way, the gas is pumped through the first pumping module 4 from the first pump 12 directly to the second pump 14 via the first conduit portion 51 of the connector 16, and/or to other pumping modules 4 via the manifold 18, e.g. following the flow path 500 shown in Figure 5.

Thus, a second mode of operation for the system 2 is provided. In the second mode of operation, servicing of a second pump 14 of a pumping module 4 may be performed, avoiding a need to shut down the pumping system 2. Further, this tends to be achieved without significant loss of pumping performance, since the pumping load of the second pump 14 of the first pumping module 4 upon which the servicing is performed may be taken up by the remainder of the pumping modules 4.

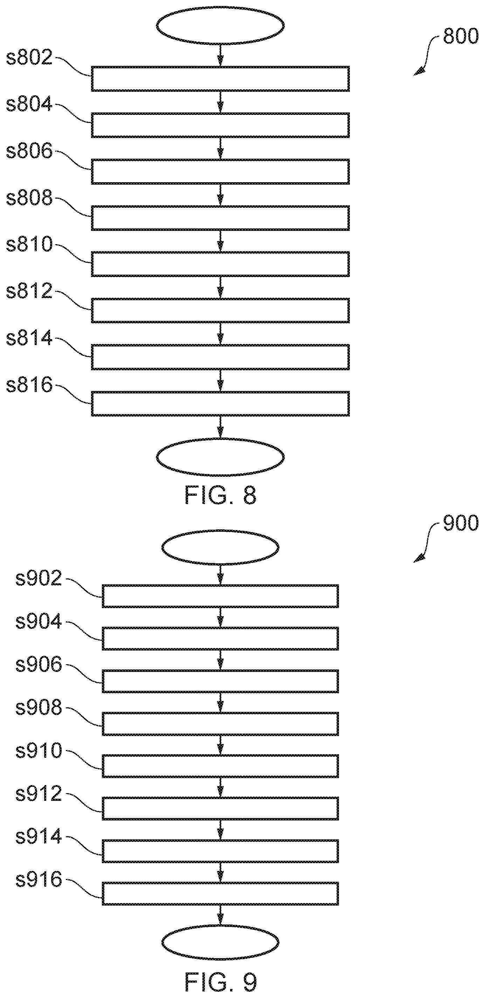

Figure 8 is a process flow chart showing certain steps of another method 800 of operating the system 2. The process of Figure 8 may correspond to a third mode of operation for the system 2.

At step s802, the system 2 may be operated in accordance with the first mode of operation, i.e. the method 400 described in more detail earlier above with reference to Figure 4.

At step s804, for a first pumping module 4 of the plurality of pumping modules 4, the second valve 72 of that first pumping module 4 is closed.

At step s806, the inlet line valve 101 and the exhaust line valve 102 along the fluid inlet line 8 and the exhaust line 10, respectively, of the first pumping module 4 are closed.

In this way, the pumps 12, 14 and the first valve 71 of the connector 16 of the first pumping module 4 are fluidly isolated from the remainder of the system 2. Also, gas is prevented from flowing though the pumps 12, 14 and the first valve 71 of the connector 16 of the first pumping module 4 by the closed foreline and exhaust line valves 101, 102, and the closed second valve 72 in that connector 16.

At step s808, after fluidly isolating the pumps 12, 14 and the first valve 71 of the connector 16 of the first pumping module 4, the isolated pumps 12, 14 may be turned off or deactivated. The isolated first pump 12 and/or second pump 14 may be decoupled from the rest of the system 2.

At step s810, after fluidly isolating the pumps 12, 14 and the first valve 71 of the connector 16 of the first pumping module 4, a servicing operation (such as an inspection, maintenance, cleaning, repair, and/or replacement operation) is performed on the isolated first pump 12, second pump 14 and/or the first valve 71 of the connector 16. The servicing operation may be performed by a human operator.

At step s812, after performance of the servicing operation at step s810, the pumps 12, 14 and/or the first valve 71 of the connector 16 of the first pumping module 4 may be recoupled or reconnected to the system 2.

At step s814, the pumps 12, 14 of the first pumping module 4 may be turned on or reactivated.

At step s816, the first valve 71 of the first pumping module 4 is opened, for example by a controller of the system 2. The inlet line and exhaust line valves 101, 102 for the first pumping module 4 are also opened, for example by a controller of the system 2. The second valve 72 of the first pumping module 4 may be opened, for example by a controller of the system 2. In this way, the gas is pumped through the first pumping module 4 from the first pump 12 directly to the second pump 14 via the first conduit portion 51 of the connector 16, e.g. following the flow path 500 shown in Figure 5.

Thus, a third mode of operation for the system 2 is provided. In the third mode of operation, servicing of a first pump 12, a second pump 14, and/or of a first valve 71 of a connector 16 of a pumping module 4 may be performed, avoiding a need to shut down the pumping system 2.

Figure 9 is a process flow chart showing certain steps of another method 900 of operating the system 2. The process of Figure 9 may correspond to a fourth mode of operation for the system 2.

At step s902, the system 2 may be operated in accordance with the first mode of operation, i.e. the method 400 described in more detail earlier above with reference to Figure 4.

At step s904, for each pumping module 4 other than a first pumping module 4, the second valve 72 of that pumping module 4 is closed, for example by a controller of the system 2. In this way, each of the pumping modules 4 other than a first pumping module 4 is fluidly isolated from the manifold 18.

At step s906, the inlet line valve 101 and the exhaust line valve 102 along the fluid inlet line 8 and the exhaust line 10, respectively, of the first pumping module 4 are closed.

In this way, the first pumping module 4 and the manifold 18 are fluidly isolated from the rest of the system 2. Also, gas is prevented from flowing through the first pumping module 4 and the manifold 18.

At step s908, after isolating the first pumping module 4 and the manifold 18, those entities may be purged, for example by pumping nitrogen gas therethrough. subsequently, the pumps 12, 14 of the first pumping module 4 may be turned off or deactivated. The first pump 12, the second pump 14, the connector 16 and/or the manifold 18 may be decoupled from the rest of the system 2.

At step s910, after isolating the first pumping module 4 and the manifold 18, a servicing operation (such as an inspection, maintenance, cleaning, repair, and/or replacement operation) is performed on at least a part of the first pumping module 4 and/or the manifold 18. For example, the serving operation may be performed on the first pump 12, the second pump 14, the first valve 71 and/or the second valve 72 of the first pumping module 4. The servicing operation may be performed by a human operator.

At step s912, after performance of the servicing operation at step s910, the first pumping module 4 and the manifold 18 may be recoupled or reconnected to the system 2.

At step s914, the pumps 12, 14 of the first pumping module 4 may be turned on or reactivated.

At step s916, the first valve 71 of the first pumping module 4 is opened, for example by a controller of the system 2. The inlet line and exhaust line valves 101, 102 for the first pumping module 4 are also opened, for example by a controller of the system 2. The second valve 72 of the first pumping module 4 may also be opened, for example by a controller of the system 2. In this way, the gas is pumped through the first pumping module 4 from the first pump 12 directly to the second pump 14 via the first conduit portion 51 of the connector 16, e.g. following the flow path 500 shown in Figure 5.

Thus, a fourth mode of operation for the system 2 is provided. In the fourth mode of operation, servicing of a first pump 12, a second pump 14, a connector 16 (e.g. of the first valve 71 and/or the second valve 72), or of the manifold 18 may be performed, avoiding a need to shut down the pumping system 2.

In many vacuum pumping systems, a vacuum pump module may comprise a booster pump and dry pump combination in a single package. For some applications, higher vacuum capability is required so a large booster can be added on top of the pump combination to create a so-called "triple stack". The term "triple stack" is typically used to refer to a combination of two pump packages, which may comprise a first package having a booster (1 pump) and a second package having a pump combination (2 pumps). Such triple stacks tend to be difficult to service, as the pumps tend to be physically large. Additional safety measures tend to be required, and servicing tends to take considerably longer compared to servicing a single unit.

Conventional system designs address these problems by enabling pump separation inside the system, and may allow either of the pumps packages to be removed for service separately. However, in conventional systems that address these problems, there is no direct pipe between successive pumps. Vacuum pumps are typically sensitive to the natural 'resistance' in the pipes feeding into them; the more bends and restrictions in a pipe, the less 'conductance'. Thus, the lack of a direct, straight pipe between successive pumps tends to adversely affect pumping performance. The connector described herein advantageously tends to provide a straight pipe, or direct, connection between successive pumps 12, 14, while also allowing for either or both pumps to be isolated and removed from the system 2. Additionally, the system described herein allows for servicing of the gate valves while the system is in operation. Conventionally, servicing of gate valves is difficult, and may require turning off the whole system.

The present inventors have realised that it tends to be the case that the pump combination is more likely to require servicing than the booster pump. The above-described apparatus tends to allow for easy isolation and removal of a pump combination (second pump) in a way that avoids having to turn off the whole system.

The above-described connector provides a direct path from the booster to the pump combination without going through the manifold. An isolation valve (the first valve) is located on top/upstream of the pump combination inlet. This tends to allow the bottom pump to be isolated easily for the most common pump service operation. This direct path of connection between pumps tends to provide for improved conductance and pump performance. The connector conduit branches between the pumps before the first valve. This branch (i.e. the second conduit portion) transitions rearwards towards the manifold that runs across the rear of the system. This branch has a gate valve (i.e. the second valve) that allows the whole triple stack to be isolated from the manifold if required. By turning off both gate valves the booster can be separated and removed independently while the rest of the system continues to operate.

Advantageously, the connector can be applied in different orientations.

In the above embodiments, the connector is implemented in a modular vacuum pumping and/or abatement system that is described in more detail earlier above with reference to Figures 1 and 2. The pumping modules are arranged and connected together in a side-by-side, contiguous arrangement, each pumping module being attached to one or more adjacent modules at one or both of its lateral sides. However, in other embodiments, the connector is implemented in a different type of vacuum pumping and/or abatement system, which is different to that described above.

In the above embodiments, the connector connects together two vacuum pumps, specifically a booster pump to a combination pump. However, in other embodiments, the connector is used to connect together a different pair of entities, for example to connect together two combination pumps, or a vacuum pump to an abatement apparatus.

### Reference numerals:

2 - vacuum pumping and/or abatement system
4 - pumping module
6 - entity
8 - fluid input
10 - exhaust line
12 - first pump
14 - second pump
16 - connector
18 - manifold
20 - frame
22 - base
24 - front side
26 - rear side
28 - top side
30 - bottom side
32 - lateral sides
50 - conduit
51 - first conduit portion
52 - second conduit portion
61 - first opening
62 - second opening
63 - third opening
71 - first valve
72 - second valve
400 - method
s402-s404 - method steps
500 - gas flow path
600 - method
s602-s618 - method steps
700 - gas flow path
800 - method
s802-s816 - method steps
900 - method
s902-s916 - method steps

## Claims

1. A pumping system (2) comprising:
a plurality of pumping modules (4); and
a manifold (18);
each pumping module in the plurality of pumping modules comprising:
a first vacuum pump (12);
a second vacuum pump (14); and
a connector (16);
the connector comprising a conduit (50) comprising:
a first conduit portion (51) comprising:
a first opening (61) coupled to an exhaust of the first vacuum pump (12); and
a second opening (62) coupled to an inlet of the second vacuum pump (14);
a second conduit portion (52) extending from the first conduit portion (51) at a branching point between the first opening (61) and the second opening (62), the second conduit portion (52) comprising:
a third opening (63) at an end distal from the branching point coupled to the manifold (18);
a first valve (71) disposed along the first conduit portion (51) between the branching point and the second opening (62); and
a second valve (72) disposed along the second conduit portion (52) between the branching point and the third opening (63);
wherein:
the first valve (71) is configured to selectively isolate the second vacuum pump (14);
the second valve (72) is configured to selectively isolate the first vacuum pump (12), the second vacuum pump (14) and the first valve (71); and
the manifold (18) is coupled to the third opening (63) of each pumping module in the plurality of pumping modules.

2. The pumping system (2) of claim 1, wherein the first conduit portion (51) is a substantially straight conduit between the first opening (61) and the second opening (62).

3. The pumping system (2) of any preceding claim, wherein the second conduit portion (52) is a substantially straight conduit between the branching point and the third opening (63).

4. The pumping system (2) of any preceding claim, wherein
the first vacuum pump (12) is a booster pump; and/or
the second vacuum pump (14) is a combination vacuum pump.

5. A method for operating a pumping system (2), the pumping system being in accordance with any preceding claim, the method comprising:
for each pumping module (4) in the plurality of pumping modules:
opening the first valve (71) of that pumping module; and
pumping, by the first and second vacuum pumps (12, 14) of that pumping module, fluid from the first vacuum pump (12) to the second vacuum pump (14)via the first conduit portion (51).

6. The method of claim 5, further comprising:
for a first pumping module (4) of the plurality of pumping modules:
closing the first valve (71) of the first pumping module, thereby to isolate the second vacuum pump (14) of the first pumping module; and
opening the second valve (72) of the first pumping module.

7. The method of claim 6, further comprising, for at least one pumping module (4) of the plurality of pumping modules other than the first pumping module, opening the second valve (72) of that pumping module, such that the at least one pumping module of the plurality of pumping modules takes the pumping load of the second vacuum pump (14) of the first pumping module.

8. The method of claim 6 or 7, further comprising, after isolating the second vacuum pump (14) of the first pumping module (4), performing a servicing operation on the second vacuum pump (14) of the first pumping module.

9. The method of claim 5, further comprising:
for a first pumping module (4) of the plurality of pumping modules:
closing the second valve (72) of the first pumping module, thereby to isolate the first vacuum pump (12), the second vacuum pump (14), and the first valve (71) of the first pumping module from the remainder of the pumping system (2).

10. The method of claim 9, further comprising, after isolating the first vacuum pump (12), the second vacuum pump (14), and the first valve (71) of the first pumping module (4) from the remainder of the pumping system (2), performing a servicing operation on one or more of the first vacuum pump (12), the second vacuum pump (14), or the first valve (71) of the first pumping module.

11. The method of claim 5, further comprising:
for a first pumping module (4) of the plurality of pumping modules:
closing the second valve (72) of each pumping module (4) of the plurality of pumping modules other than the first pumping module, thereby to isolate each pumping module of the plurality of pumping modules other than the first pumping module from the manifold (18).

12. The method of claim 11, further comprising, after isolating each pumping module (4) of the plurality of pumping modules other than the first pumping module from the manifold (18):
performing a servicing operation on one or more of the first vacuum pump (12), the second vacuum pump (14), the connector (16), the first valve (71), and/or the second valve (72) of the first pumping module; and/or
performing a servicing operation on the manifold (18).

## Patentansprüche

1. Pumpsystem (2), aufweisend:
eine Mehrzahl von Pumpmodulen (4) und
einen Verteiler (18);
wobei jedes Pumpmodul in der Mehrzahl von Pumpmodulen aufweist:
eine erste Vakuumpumpe (12);
eine zweite Vakuumpumpe (14) und
einen Verbinder (16);
wobei der Verbinder einen Kanal (50) aufweist, der aufweist:
einen ersten Kanalabschnitt (51), aufweisend:
eine erste Öffnung (61), die mit einem Ausgang der ersten Vakuumpumpe (12) gekoppelt ist; und
eine zweite Öffnung (62), die mit einem Einlass der zweiten Vakuumpumpe (14) gekoppelt ist;
einen zweiten Kanalabschnitt (52), der sich von dem ersten Kanalabschnitt (51) erstreckt, an einem Verzweigungspunkt zwischen der ersten Öffnung (61) und der zweiten Öffnung (62), wobei der zweite Kanalabschnitt (52) Folgendes aufweist:
eine dritte Öffnung (63) an einem von dem Verzweigungspunkt entfernt gelegenen Ende, die mit dem Verteiler (18) gekoppelt ist;
ein erstes Ventil (71), das entlang des ersten Kanalabschnitts (51) zwischen dem Verzweigungspunkt und der zweiten Öffnung (62) angeordnet ist; und
ein zweites Ventil (72), das entlang des zweiten Kanalabschnitts (52) zwischen dem Verzweigungspunkt und der dritten Öffnung (63) angeordnet ist;
wobei:
das erste Ventil (71) dazu ausgebildet ist, selektiv die zweite Vakuumpumpe (14) zu isolieren;
das zweite Ventil (72) dazu ausgebildet ist, selektiv die erste Vakuumpumpe (12), die zweite Vakuumpumpe (14) und das erste Ventil (71) zu isolieren; und
der Verteiler (18) mit der dritten Öffnung (63) jedes Pumpmoduls in der Mehrzahl von Pumpmodulen gekoppelt ist.

2. Pumpsystem (2) gemäß Anspruch 1, wobei der erste Kanalabschnitt (51) ein im Wesentlichen gerader Kanal zwischen der ersten Öffnung (61) und der zweiten Öffnung (62) ist.

3. Pumpsystem (2) gemäß einem der vorhergehenden Ansprüche, wobei der zweite Kanalabschnitt (52) ein im Wesentlichen gerader Kanal zwischen dem Verzweigungspunkt und der dritten Öffnung (63) ist.

4. Pumpsystem (2) gemäß einem der vorhergehenden Ansprüche, wobei
die erste Vakuumpumpe (12) eine Booster-Pumpe ist und/oder
die zweite Vakuumpumpe (14) eine Kombinations-Vakuumpumpe ist.

5. Verfahren zum Betreiben eines Pumpsystems (2), wobei das Pumpsystem einem der vorhergehenden Ansprüche entspricht, wobei das Verfahren aufweist:
für jedes Pumpmodul (4) in der Mehrzahl von Pumpmodulen:
Öffnen des ersten Ventils (71) dieses Pumpmoduls und
Pumpen, durch die erste und die zweite Vakuumpumpe (12, 14) dieses Pumpmoduls, von Fluid von der ersten Vakuumpumpe (12) zu der zweiten Vakuumpumpe (14) über den ersten Kanalabschnitt (51).

6. Verfahren gemäß Anspruch 5, ferner aufweisend:
für ein erstes Pumpmodul (4) aus der Mehrzahl von Pumpmodulen:
Schließen des ersten Ventils (71) des ersten Pumpmoduls, um dadurch die zweite Vakuumpumpe (14) des ersten Pumpmoduls zu isolieren; und
Öffnen des zweiten Ventils (72) des ersten Pumpmoduls.

7. Verfahren gemäß Anspruch 6, das ferner aufweist, für zumindest ein Pumpmodul (4) aus der Mehrzahl von Pumpmodulen außer dem ersten Pumpmodul das zweite Ventil (72) dieses Pumpmoduls zu öffnen, so dass das zumindest eine Pumpmodul aus der Mehrzahl von Pumpmodulen die Pumplast der zweiten Vakuumpumpe (14) des ersten Pumpmoduls übernimmt.

8. Verfahren gemäß Anspruch 6 oder 7, das ferner aufweist, nach dem Isolieren der zweiten Vakuumpumpe (14) des ersten Pumpmoduls (4) einen Wartungsvorgang an der zweiten Vakuumpumpe (14) des ersten Pumpmoduls durchzuführen.

9. Verfahren gemäß Anspruch 5, ferner aufweisend:
für ein erstes Pumpmodul (4) aus der Mehrzahl von Pumpmodulen:
Schließen des zweiten Ventils (72) des ersten Pumpmoduls, um dadurch die erste Vakuumpumpe (12), die zweite Vakuumpumpe (14) und das erste Ventil (71) des ersten Pumpmoduls vom Rest des Pumpsystems (2) zu isolieren.

10. Verfahren gemäß Anspruch 9, das ferner aufweist, nach dem Isolieren der ersten Vakuumpumpe (12), der zweiten Vakuumpumpe (14) und des ersten Ventils (71) des ersten Pumpmoduls (4) vom Rest des Pumpsystems (2) einen Wartungsvorgang an der ersten Vakuumpumpe (12), der zweiten Vakuumpumpe (14) und/oder dem ersten Ventil (71) des ersten Pumpmoduls durchzuführen.

11. Verfahren gemäß Anspruch 5, ferner aufweisend:
für ein erstes Pumpmodul (4) aus der Mehrzahl von Pumpmodulen:
Schließen des zweiten Ventils (72) jedes Pumpmoduls (4) aus der Mehrzahl von Pumpmodulen außer dem ersten Pumpmodul, um dadurch jedes Pumpmodul aus der Mehrzahl von Pumpmodulen außer dem ersten Pumpmodul von dem Verteiler (18) zu isolieren.

12. Verfahren gemäß Anspruch 11, das ferner aufweist, nach dem Isolieren jedes Pumpmoduls (4) aus der Mehrzahl von Pumpmodulen außer dem ersten Pumpmodul von dem Verteiler (18):
Durchführen eines Wartungsvorgangs an der ersten Vakuumpumpe (12), der zweiten Vakuumpumpe (14), dem Verbinder (16), dem ersten Ventil (71) und/oder dem zweiten Ventil (72) des ersten Pumpmoduls; und/oder
Durchführen eines Wartungsvorgangs an dem Verteiler (18).

## Revendications

1. Système de pompage (2) comprenant :
une pluralité de modules de pompage (4) ; et
un collecteur (18) ;
chaque module de pompage dans la pluralité de modules de pompage comprenant :
une première pompe à vide (12) ;
une seconde pompe à vide (14) ; et
un connecteur (16) ;
le connecteur comprenant un conduit (50) comprenant :
une première partie de conduit (51) comprenant :
une première ouverture (61) couplée à un refoulement de la première pompe à vide (12) ; et
une deuxième ouverture (62) couplée à une entrée de la seconde pompe à vide (14) ;
une seconde partie de conduit (52) s'étendant depuis la première partie de conduit (51) au niveau d'un point de ramification entre la première ouverture (61) et la deuxième ouverture (62), la seconde partie de conduit (52) comprenant :
une troisième ouverture (63) à une extrémité distale du point de ramification couplée au collecteur (18) ;
une première vanne (71) disposée le long de la première partie de conduit (51) entre le point de ramification et la deuxième ouverture (62) ; et
une seconde vanne (72) disposée le long de la seconde partie de conduit (52) entre le point de ramification et la troisième ouverture (63) ;
dans lequel :
la première vanne (71) est configurée pour isoler sélectivement la seconde pompe à vide (14) ;
la seconde vanne (72) est configurée pour isoler sélectivement la première pompe à vide (12), la seconde pompe à vide (14) et la première vanne (71) ; et
le collecteur (18) est couplé à la troisième ouverture (63) de chaque module de pompage dans la pluralité de modules de pompage.

2. Système de pompage (2) selon la revendication 1, dans lequel la première partie de conduit (51) est un conduit sensiblement rectiligne entre la première ouverture (61) et la deuxième ouverture (62).

3. Système de pompage (2) selon une quelconque revendication précédente, dans lequel la seconde partie de conduit (52) est un conduit sensiblement rectiligne entre le point de ramification et la troisième ouverture (63).

4. Système de pompage (2) selon une quelconque revendication précédente, dans lequel
la première pompe à vide (12) est une pompe de surpression ; et/ou
la seconde pompe à vide (14) est une pompe à vide combinée.

5. Procédé de fonctionnement d'un système de pompage (2), le système de pompage étant conforme à une quelconque revendication précédente, le procédé comprenant :
pour chaque module de pompage (4) dans la pluralité de modules de pompage :
l'ouverture de la première vanne (71) de ce module de pompage ; et
le pompage, par les première et seconde pompes à vide (12, 14) de ce module de pompage, de fluide de la première pompe à vide (12) vers la seconde pompe à vide (14) via la première partie de conduit (51).

6. Procédé selon la revendication 5, comprenant en outre :
pour un premier module de pompage (4) de la pluralité de modules de pompage :
la fermeture de la première vanne (71) du premier module de pompage, pour ainsi isoler la seconde pompe à vide (14) du premier module de pompage ; et
l'ouverture de la seconde vanne (72) du premier module de pompage.

7. Procédé selon la revendication 6, comprenant en outre, pour au moins un module de pompage (4) de la pluralité de modules de pompage autre que le premier module de pompage, l'ouverture de la seconde vanne (72) de ce module de pompage, de sorte que l'au moins un module de pompage de la pluralité de modules de pompage prenne la charge de pompage de la seconde pompe à vide (14) du premier module de pompage.

8. Procédé selon la revendication 6 ou 7, comprenant en outre, après l'isolation de la seconde pompe à vide (14) du premier module de pompage (4), la réalisation d'une opération d'entretien sur la seconde pompe à vide (14) du premier module de pompage.

9. Procédé selon la revendication 5, comprenant en outre :
pour un premier module de pompage (4) de la pluralité de modules de pompage :
la fermeture de la seconde vanne (72) du premier module de pompage, pour ainsi isoler la première pompe à vide (12), la seconde pompe à vide (14), et la première vanne (71) du premier module de pompage du reste du système de pompage (2).

10. Procédé selon la revendication 9, comprenant en outre, après l'isolation de la première pompe à vide (12), de la seconde pompe à vide (14) et de la première vanne (71) du premier module de pompage (4) du reste du système de pompage (2), la réalisation d'une opération d'entretien sur une ou plusieurs parmi la première pompe à vide (12), la seconde pompe à vide (14) ou la première vanne (71) du premier module de pompage.

11. Procédé selon la revendication 5, comprenant en outre :
pour un premier module de pompage (4) de la pluralité de modules de pompage :
la fermeture de la seconde vanne (72) de chaque module de pompage (4) de la pluralité de modules de pompage autre que le premier module de pompage, pour ainsi isoler chaque module de pompage de la pluralité de modules de pompage autre que le premier module de pompage du collecteur (18).

12. Procédé selon la revendication 11, comprenant en outre, après l'isolation de chaque module de pompage (4) de la pluralité de modules de pompage autre que le premier module de pompage du collecteur (18) :
la réalisation d'une opération d'entretien sur un ou plusieurs parmi la première pompe à vide (12), la seconde pompe à vide (14), le connecteur (16), la première vanne (71) et/ou la seconde vanne (72) du premier module de pompage ; et/ou
la réalisation d'une opération d'entretien sur le collecteur (18).
